# EUROPEAN PATENT SPECIFICATION

(11) **EP 3 557 817 B1**
(45) Date of publication and mention of the grant of the patent: **22.04.2026**
(21) Application number: 18167902.8
(22) Date of filing: 18.04.2018
(51) Int. Cl.: H04L 41/044, H04L 41/40, H04W 24/02, H04W 36/00, H04L 45/74, H04L 45/44, H04W 88/08

(54) **FIRST NETWORK NODE, METHOD TO OPERATE THE FIRST NETWORK NODE, SECOND NETWORK NODE, AND METHOD TO OPERATE THE SECOND NETWORK NODE**
ERSTER NETZWERKKNOTEN, VERFAHREN ZUM BETRIEB DES ERSTEN NETZWERKKNOTENS, ZWEITER NETZWERKKNOTEN UND VERFAHREN ZUM BETRIEB DES ZWEITEN NETZWERKKNOTENS
PREMIER NOEUD DE RÉSEAU, PROCÉDÉ POUR FAIRE FONCTIONNER LE PREMIER NOEUD DE RÉSEAU, SECOND NOEUD DE RÉSEAU ET PROCÉDÉ POUR FAIRE FONCTIONNER LE SECOND NOEUD DE RÉSEAU

(43) Date of publication of application: 23.10.2019
(73) Proprietor: Nokia Technologies Oy, 02610 Espoo (FI)
(72) Inventor: Horst, Roessler, 70794 Filderstadt (DE); Md Ashraful, Alam, 70372 Stuttgart (DE)
(74) Representative: DREISS Patentanwälte PartG mbB

(56) References cited:
- WO-A1-2016/188548
- WO-A1-2017/205755
- US-A1- 2017 086 191
- US-A1- 2018 063 731

## Description

### Field of the invention

The invention relates to a first network node, a method to operate the first network node, a second network node, and a method to operate the second network node.

### Background

The traditional RAN and future CRAN solution is mainly focused on using the resources deployed by the operator. This creates high pressure on operator investments to meet the future huge traffic load.

Centralized RAN and future CRAN uses centralized control plane solution, where the user processing takes place far away from the end device (either in the base station or in the Edge cloud), which declines the overall throughput and also other service KPIs (latency, multi-connectivity etc.). To maintain the required KPIs, base station and/or NFVs, only serve a small number of users, which ultimately increases the CAPEX and OPEX of the operator.

VNFs may be retrieved from a VNF repository (VNF service provider) to be deployed and placed to the intended network element fulfilling required service KPIs. The SDN controller is a central network element containing a set of abstracted control plane functions (Apps) which can be seen as VNFs. The SDN controller as a set of VNFs runs on a general purpose computing platform and may be located at the Edge Cloud or the EPC data center which comprise traditional VNFs. For increasing resource usage efficiency and coordination of FOG and Cloud resources specialized VNFs may be deployed on UEs.

US 2017/0086191 A1 discloses a distributed software defined network (SDN) packet core system which is configured to support a plurality of radio access technologies. The distributed SDN packet core system can include a cloud-based SDN centralized infrastructure instance and a plurality of local SDN infrastructure instances distributed in proximity to wireless access networks and radio access points thereof.

WO 2016/188548 A1 discloses a network function hosting node and a telecommunication network with such a network function hosting node. The network function hosting node for a telecommunication network is configured to host at least one virtualized network function entity, VNFE, wherein at least one virtual connection, VC, is configured to establish a connection to a second VNFE of a second network function hosting node. The network function hosting node is configured to receive a control plane message, and a data plane message. The network function hosting node is further configured to forward the first type message to the at least one VNFE and to configure the at least one VNFE and to forward the second type message via the at least one VC to the second VNFE.

### Summary

The invention is defined by the appended claims. A first network node (A) of a radio communications network, a method to operate a first network node (A), a second network node (P) and a method for operating a second network node (P) are provided as set out in the independent claims. According to a first aspect of the description a first network node of a cellular radio communications network is provided. The first network node comprising at least one processor, at least one memory including computer program code, and at least one radio communication module, the at least one memory and computer program code configured to, with the at least one processor, and the at least one communication module, cause the first network node at least to operate according to a first operating mode. The first operating mode comprises transmitting a data path request to a second network node via a direct link between the first and second network nodes, wherein the data path request indicates a destination network node, receiving a data path confirmation in response to the data path request from the second network node via the direct link, and transmitting data from the first network node via the data path towards the destination network node.

Advantageously, the communication via the direct link helps to distribute control plane processing in the radio domain. It is established a decentralized control plane for data path construction and distribution. This decentral data path creation advantageously helps to scale the network on demand as processing effort and handling is reduced for the radio network operator. In summary, coordination, connectivity, and resource management benefit.

According to an example of the description the first operating mode comprises determining local network information; and transmitting the local network information to the second network node via the direct link. Collecting the local network information at the second network node advantageously provides a collection of aggregated local network information at the side of the second network node. Therefore, the second network node collects radio informations from first radio equipments in its radio vicinity. The second network node is able to share the aggregated local network information with other network nodes operating in the second operating mode and/or with a central control unit. This is an advantageous trade-off between information collection overhead and communication overhead. Moreover, the collection of local network information allows the construction of data paths by using direct links between network nodes. Moreover, hybrid data paths comprising an uplink path, a downlink path and a direct link path are feasible.

According to an example the first network node is configured for transmitting a first registration request to the second network node via the direct link, receiving a first registration confirmation in response to the first registration request, and starting the first operating mode in dependence on the reception of the first registration confirmation. Therefore, the network nodes are able to organize theirself in selecting the first or second operating mode. Advantageously, downlink control information for selecting the first or second operating mode can be reduced or is not necessary.

According to an example, the first network node is configured for transmitting a further data path request via at least one direct link; and switching from the first operating mode to the second operating mode in case of an absence of a response to the further data path request. Advantageously, the first network node provides a self-configuration with regard to the operating mode. Therefore, no external managing entity is necessary for mode selection.

According to an example the first network node is configured for operating according to a second operating mode, the second operating mode comprising receiving a data path request from a third network node via a second direct link between the first and third network nodes, wherein the data path request indicates a further destination network node, and transmitting a data path confirmation to the third network node via the second direct link; and selecting the first operating mode or the second operating mode. Advantageously, the network node decides on its own in which operating mode it operates, therefore avoiding communication and proceeding overhead of other network entities.

According to a second aspect of the description a method to operate a first network node is provided. The method comprises operating according to a first operating mode, the first operating mode comprising transmitting a data path request to a second network node via a direct link between the first and second network nodes, wherein the data path request indicates a destination network node, receiving a data path confirmation in response to the data path request from the second network node via the direct link, and transmitting data from the first network node via the data path towards the destination network node.

According to a third aspect of the description a second network node of a cellular radio communications network is provided. The second network node comprises at least one processor, at least one memory including computer program code, and at least one radio communication module, the at least one memory and computer program code configured to, with the at least one processor, and the at least one communication module, cause the second network node at least to operate according to a second operating mode. The second operating mode comprises receiving a data path request from a first network node via a direct link between the first and second network nodes, wherein the data path request indicates a destination network node, and transmitting a data path confirmation to the first network node via the direct link. Advantageously, the communication via the direct link helps to distribute control plane processing in the radio domain. It is established a decentralized control plane for data path construction and distribution. This decentral data path creation advantageously helps to scale the network on demand as processing effort and handling is reduced for the radio network operator.

According to an example, the second operating mode comprises receiving a plurality of local network informations from a plurality of first network nodes via a corresponding direct link, and determining aggregated local network information in dependence on the received plurality of local network informations. Collecting the local network information at the second network node advantageously provides a collection of aggregated local network information at the side of the second network node. Therefore, the second network node collects radio informations from first radio equipments in its radio vicinity. The second network node is able to share the aggregated local network information with other network nodes operating in the second operating mode and/or with a central control unit. This is an advantageous trade-off between information collection overhead and communication overhead.

According to an example, the second operating mode comprises receiving further aggregated local network information from a third network node, and determining the aggregated local network information in dependence on the further aggregated local network information. The reception of further aggregated local network information allows for completing a data path along direct links. Therefore, the load on uplink and downlink channels are reduced for control and payload data.

According to an example, the second operating mode comprises determining a data path confirmation in dependence on the aggregated local network information, wherein the aggregated local network information comprises path information for reaching the destination network node, and transmitting the data path confirmation to the first network node. By determining the data path confirmation the second network node reduces control effort at the operators premises.

According to an example, the second operating mode comprises transmitting aggregated local network information to a controller unit of a radio access network. Advantageously, the controller unit further aggregates the local network information and is therefore able to determine optimized hybrid data paths.

According to an example, the second network node is configured for transmitting a first registration request via at least one further direct link, and starting the second operating mode in dependence on an absence of a first registration confirmation in response to the first registration request. A simple and easy to implement selection method is provided for providing the functions of the second operating mode in the direct link domain.

According to an example, the second network node is configured for operating according to a first operating mode, the first operating mode comprising transmitting a data path request to a fourth network node via a third direct link between the first and fourth network nodes, wherein the data path request indicates a further destination network node, receiving a data path confirmation from the fourth network node via the third direct link, and transmitting data from the first network node via the data path towards the destination network node; and selecting the first operating mode or the second operating mode. Advantageously, the network node decides on its own in which operating mode it operates, therefore avoiding communication and proceeding overhead of other network entities.

According to an example, the second network node is configured for determining a number of network nodes in the vicinity of the second network node, the number of network nodes operating in the second operating mode, and switching from the second operating mode to the first operating mode if the number of network nodes exceeds a threshold number. Therefore, the number of network nodes operating in the second operating mode in a certain area is delimited. This advantagously provides a decentralized control mechanism in order to provide a heterogeneous structure of network nodes operating in the first or second operating mode.

According to a fourth aspect of the description a method for operating a second network node of a radio communications network is provided, the method comprising operating according to a second operation mode. The second operating mode comprises receiving a data path request from a first network node via a direct link between the first and second network nodes, wherein the data path request indicates a destination network node, and transmitting a data path confirmation to the first network node via the direct link.

### Brief description of the figures

Figure 1 depict a schematic flow diagram to operate a first network node;
Figure 2 depict a schematic flow diagram to operate a second network node;
Figures 3 and 4 depict a schematic block diagram of a radio communications network; and
Figures 5 to 7 depict a schematic sequence diagram for operating the radio communications network.

### Description of the embodiments

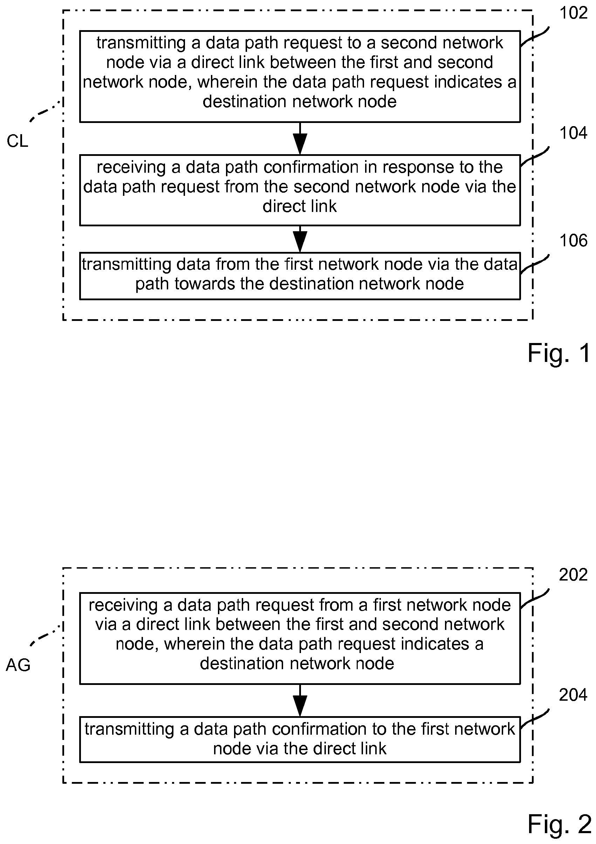

Figure 1 shows a schematic flow diagram to operate a first network node in a first operating mode CL. According to a step 102 the first network node transmits a data path request to a second network node via a direct link, especially a direct radio link, between the first and second network nodes, wherein the data path request indicates a destination network node. According to an example, the data path request comprises at least one path selection key performance indicator like a bandwidth requirement, or a latency allowance. In case of multiple paths available such a key performance indicator determines the resulting data path determined by a best path selection algorithm. According to a step 104 the first network node receives a data path confirmation in response to the data path request from the second network node via the direct link. According to a step 106 the first network node transmits data from the first network node via the data path towards the destination network node.

The examples in this description are based on network nodes being user equipments of a radio communications network. In a further example, the network nodes are wire-bound. In the case of the respective node being a user equipment, the network node comprises user equipments like cellular phones, smart phones, wearables like a smart watch, or a terminal equipment for machines, cars, consumer electronics and the like.

Figure 2 shows a schematic flow diagram to operate the second network node in a second operating mode AG. According to a step 202 the second network node receives a data path request from the first network node via a direct link between the first and second network nodes, wherein the data path request indicates the destination network node. According to a step 204 the second network node transmits a data path confirmation to the first network node via the direct link.

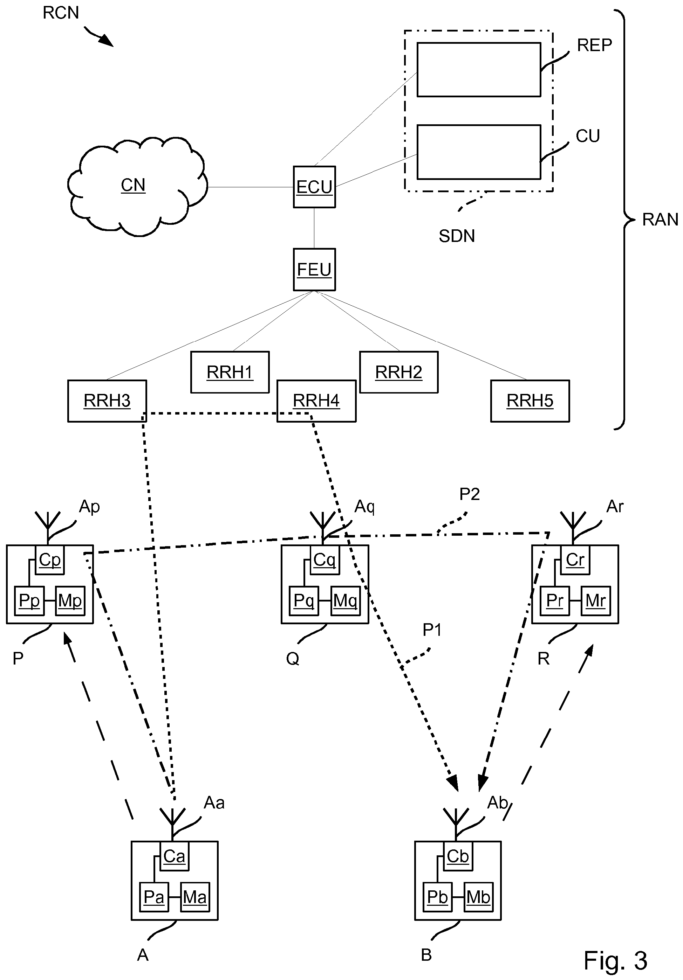

Figure 3 shows schematic radio communications network RCN comprising a radio access network RAN for attending a plurality of network nodes A, B, P, Q, R. The radio access network RAN comprises a software defined network controller SDN, which is connected to an edge cloud unit ECU, the edge cloud unit ECU being connected to the front end unit FEU. The edge cloud unit ECU is connected to core network CN. A plurality of remote radio heads RRH1 to RRH5 are connected to the front end unit FEU. Each one of the remote radio heads RRH1 to RRH5 serves a radio cell. The remote radio heads RRH1 to RRH5 are connected wirelessly or by wire. The remote radio heads RRH1 to RRH5 serve alone or in combination with each other the network nodes A, B, P, Q, and R.

The SDN comprises a software repository REP, from where virtualized network functions can be downloaded to the network nodes A, B, P, Q, R, in order to be executed. A controller unit CU serves as an information collecting instance and routing control instance.

The network node A, B, P, Q, R comprises at least one memory Ma, Mb, Mp, Mq, Mr, at least one processor Pa, Pb, Pp, Pq, Pr, at least one communication module Ca, Cb, Cp, Cq, Cr, and - in the case of a the network node being a user equipment - at least one antenna Aa, Ab, Ap, Aq, Ar, respectively. For example, computer program code representing a virtualized network function is being downloaded by the network node A, B, P, Q, R from the software repository REP, is stored on the corresponding at least one memory Ma, Mb, Mp, Mq, Mr, and it is executed with the at least one processor Pa, Pb, Pp, Pq, Pr, the at least one radio communication module Ca, Cb, Cp, Cq, Cr, and - if applicable - the at least one antenna Aa, Ab, Ap, Aq, Ar.

The network nodes A and B operate in the first operating mode CL, which is also termed client mode. The network nodes P, Q and R are operating in the second operating mode AG, which is also termed agent mode. A is client of agent P, and B is client of agent R as indicated by the dashed arrow lines.

First example: The first network node A determines data to be transmitted to the destination network node B. The first network node A transmits a data path request to its corresponding agent, namely the second network node P. In this example, the second network node P has no knowledge about the location or reachability of the destination node B and transmits another data path request to the control unit CU. The control unit CU determines a path P1 to the destination network node B, and responds to the second network node P with a data path confirmation. The data path confirmation is also transmitted to the network nodes A, Q, RRH3, RRH4, so that these network nodes modify their switching and/or routing table accordingly. The second network node P transmits the data path confirmation to the first network node A. In response to the data path confirmation the first network node A transmits the data according to the hybrid path P1, namely along an uplink between the first network node A and the remote radio head RRH3, a wired link between RRH3 and RRH4, a downlink between RRH4 and the network node Q, and a direct link between the network nodes Q, B.

Second example: The network node A determines data to be transmitted to the destination network node B. The second network node P has or establishes knowledge about how to reach the destination network node B along direct links between network nodes. The second network node P determines the path P2 in dependence on aggregated local network information present at the second network node P. In addition or alternatively, the second network node P triggers its neighboring third network node Q operating in the second operating mode AG in order to establish at least a part of the data path P2. Accordingly, the second network node P determines or receives a data path confirmation in response to the data path request and transmits the data path confirmation to the first network node A. Other network nodes are also notified about the data path creation in order to update their switching and/or routing tables. The network node A transmits the data along the data path P2, which comprises solely direct links.

Of course, the network nodes A, B, P, Q, R may switch between the first and second operating mode in dependence on proper settings, load, energy consumption, location, and/or other radio information. By default the network node A, B, P, Q, and R run in the first operating mode / client mode. If there is no network node available running in the second operating mode / agent mode the network nodes in the proximity select one of the network nodes to run in the second operating mode in dependence on proper settings, load, energy, consuption, location and/or other radio information, movement speed, etc. All the network nodes running in the first operating mode report to only one network node running in the second operating mode. In case that multiple second operating mode running network nodes are available in the proximity of a first operating mode running network node, then the first operating mode running network node selects one of the second operating mode running network nodes in dependence on path condition like radio link condition. In case that the second network node is disconnected or moved from the proximity, then based on above criteria another network node will switch to the second operating mode.

A direct link is defined by a direct data transmission between two network nodes, also known as device to device communication, D2D, or an ad-hoc network link.

In many cases a direct link is valid for a short period of time due to movement of UEs. But for shorter distances the direct link provides an alternative option to the regular route across the base station and/or mid-haul networks. Recent P2P technologies such as LTE direct or Wi-Fi direct could be used for a direct link between UEs. The wireless path is different to the wireline path due to the more frequent changes in the topology and link characteristics and capacities. The first and second operating mode provides a topology monitoring on the UEs, which observe the direct proximity of the UE. In the first and second operating modes the UEs report topology changes and link load within the wireless cell-less network to the controller unit CU enabling the computation of E2E paths P1, P2 comprising sections of the core network, mid-haul network, front-haul network, wireless backhaul network and wireless cell-less network. The second operating mode is selected according to current resource consumption and preferences set by the user or operator. A belongs to the resource sharing community when operating in the first operating mode, and feeds the distributed UEs operating in the second operating mode.

In general the wireless path may be a part of an overall end to end path consisting of arbitrary mixture of wireline and wireless path sections including wired network sections, wireless backhaul sections and fog sections. That means E2E routing requires wireline and wireless topology information.

In order to support routing methods, the second operating mode comprises control plane mechanisms similar as the peer discovery method which may support constructing network topology tables. The peer discovery of the second operating mode serves a few adjacent client UEs only to limit the resource requirements of the network node in the second operating mode. The second operating mode runs a randomized procedure in which a UE sends signals without any knowledge about the location of the intended peer. To support efficient routing among a sequence of UEs the UEs operating in the second operating mode communicate with neighbor UEs operating in the second operating mode.

The VNF provides different variants of virtualized network functions which are executable on a network element and/or on the UE. The specialized virtual network functions executable on the UE use e.g. app isolation mechanisms instead of using virtualization methods such as containers or virtual machines. The virtualized network functions are realized by adopting a MicroService concept which emphasizes a high cohesion inside the MicroService (VNF) and low coupling between the MicroServices (VNFs). This enables for fast and efficient deployment of single VNFs at runtime in case of feature enhancement or bug fixing which increases the maintainability of a system of VNFs drastically. The automated and efficient (partial) deployment of MicroServices to coordinate and support the increasing resource demand enables for achieving automatic scalability by incorporating UEs resources. With the high cohesive and loose coupled MicroServices partial deployment and efficient maintenance is supported. Even at runtime some feature extension or bug fixing on a single MicroService can be very fast - avoiding system downtime.

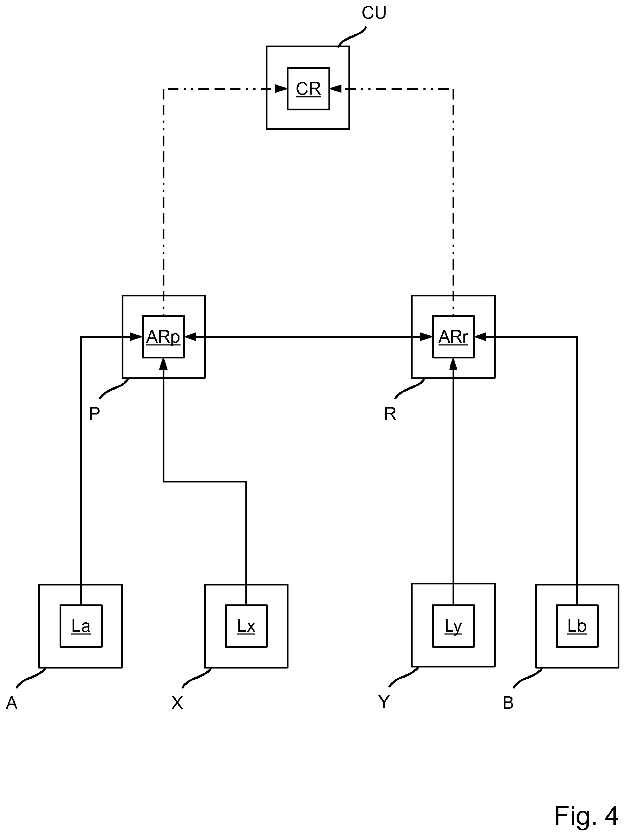

Figure 4 shows schematic block diagram. The network nodes A, X, Y, B, R operating in the first operating mode (client) determine the local network information, La, Lx, Ly, Lb in order to report via a corresponding direct link to the corresponding network node P, R operating in the second operating mode (agent). In an example, the first mode operating network nodes collect neighbor information and the this neighbor information to the second mode operating network node, which then has a better idea about the topology. The network nodes P, R determine aggregated local network information ARp, ARr in dependence on the received local network information La, Lx / Ly, Lb. The network nodes P and R exchange at least a part of the aggregated local network information ARp, ARr with each other, therefore representing an agent network. Furthermore, network nodes P and R report their aggregated local network information ARp, ARr to the control unit CU, so that the control unit CU determines centralized radio information CR. The centralized radio information CR is used by the control unit CU for determining data paths comprising direct links between network nodes.

The local network information L, the aggregated local network information AR, and the centralized radio information CR comprises at least one of the following: direct link resource capabilities between two UEs, direct link resource congestion/load between UEs, UE topology information, GPS information of UE.

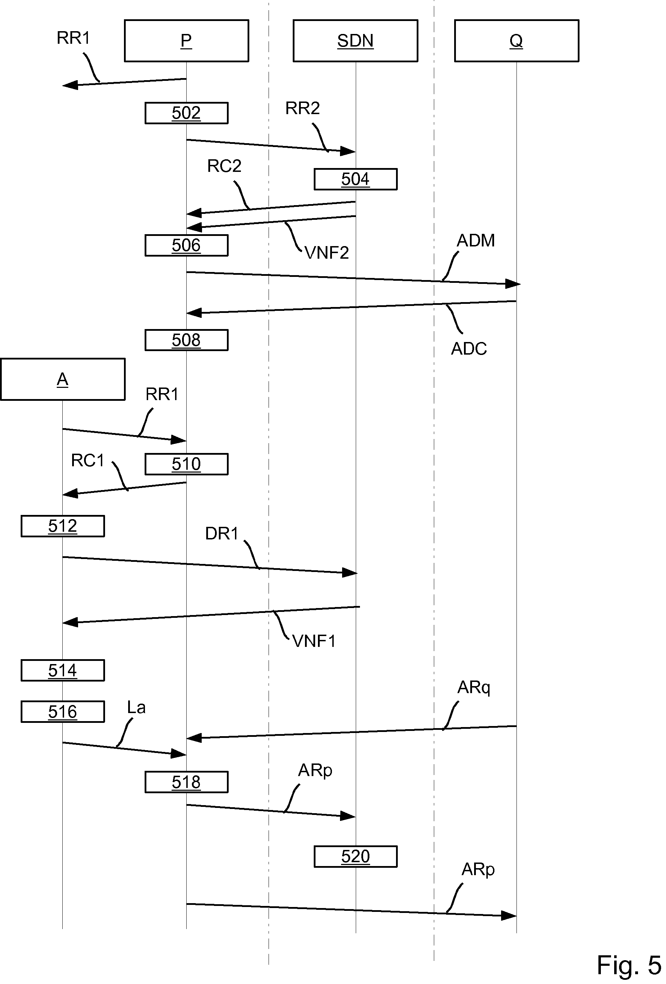

Figure 5 shows a schematic sequence diagram for operating the radio communications network. The second network node P runs in the first operating mode CL and transmits the first registration request RR1 via at least one further direct link. In absence of a first registration confirmation in response to the first registration request RRR1, the second network node P determines in step 502 to operate in the second operating mode AG. Therefore, the second network node appoints itself as an agent. Accordingly, the second network node P transmits a second registration request RR2 to the SDN in order to register itself as an agent. According to the step 504 SDN registers the second network node P as operating in the second operating mode. The second network node P receives a second registration confirmation RC2 and downloads a virtual network function VNF2. In step 506 the second network node P activates the virtual network function VNF2 in order to fully operate in the second operating mode AG.

The second network node P tries to connect to a agent network by conducting an agent discovery via a direct link. Therefore, the second network node P transmits the agent discovery message ADM to the network node Q. Upon receiving the agent discovery message ADM, the third network node Q transmits an agent discovery confirmation ADC to the second network node P. According to a step 508 the second network node P updates its list of agents in its vicinity in dependence on the agent discovery confirmation ADC. This agent discovery is invoked frequently to maintain the list of agents updated.

In the present example, the first network node A appears after step 508 in the vicinity of the second network node P and transmits a further first registration request RR1 via a direct link to the second network node P. According to a step 510 the second network node P registers the first network node A in its client list and transmits a first registration confirmation RC1 to the first network node A. According to step 512, the first network node A determines to operate in the first operating mode. Therefore, the first network node A appoints itself to the role of a client of the agent in form of the second network node P. According to the download request DR1 the first network node A downloads a first virtualized network function VNF1 in order to activate the virtualized network function VNF1 in step 514 for fully operating in the first operating mode.

In step 516 the first network node A collects and determines the local network information La for example by listening to a direct link channel. The local network information La is transmitted to the second network node P, which aggregates the received local network informations in a step 518 into aggregated local network information ARp.

The aggregated local network information ARp is transmitted to SDN in order to collect the aggregated local informations from the radio domain and to determine the centralized radio information in step 520. The aggregated local network information ARp is also shared with further network node Q via a corresponding direct link.

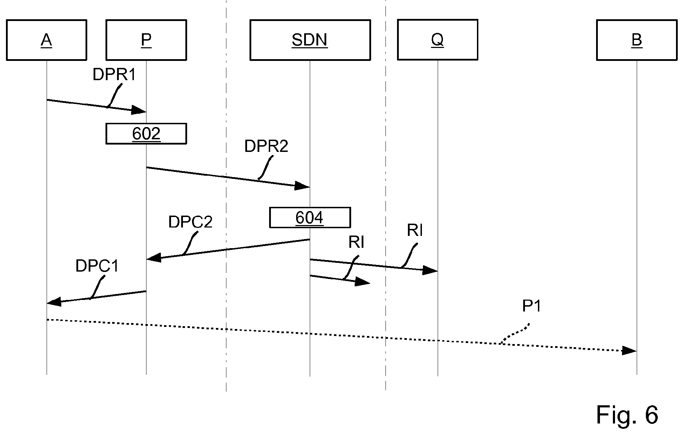

Figure 6 shows a schematic sequence diagram for operating the radio communications network according to the first example of figure 3. The first network node A transmits a data path request DPR1 to the second network node P. In step 602 the second network node P checks whether its aggregated local network information comprises information regarding the destination network node B. As this is not the case, the second network node P transmits a data path request DPR2 to the SDN. The SDN calculates according to a best path finding algorithm the data path P1 from the first network node A to the destination network node B and transmits routing information RI to the network entities on the data path P1. The SDN transmits a data path confirmation DPC2 to the second network node P. In dependence on the data path confirmation DPC2 the second network node P transmits a data path confirmation DPC1 to the first network node A. Upon receiving the data path confirmation DPC1, the first network node A starts to transmit the determined data along the data path P1 to the destination network node B.

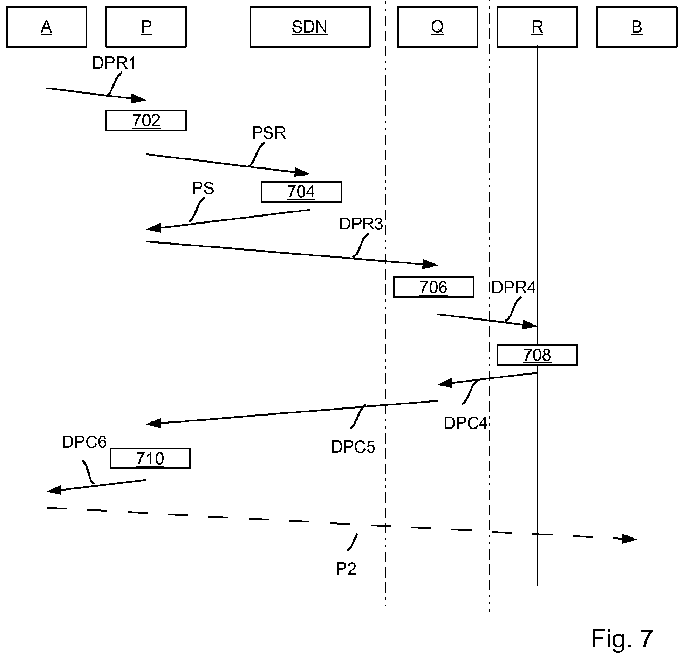

Figure 7 shows a schematic sequence diagram for operating the radio communications network according to the second example of figure 3. The first network node A transmits a data path request DPR1 to the second network node P. In step 602 the second network node P checks whether its aggregated local network information comprises information regarding the destination network node B. As this is the case, the second network node P transmits a data path request DPR3 to the network node Q. The network node Q transmits a further data path request DPR4 to the agent of destination network node B, namely network node R. The network node R determines a data path confirmation DPC4, which is handed over via data path confirmations DPC5 and DPC6 to the first network node A. In an example, the data path confirmations DPC4, DPC5 and DPC6 comprise at least a part of the information for establishing the data path P2. Upon receiving the data path confirmation DPC6, the determined data is transmitted from the first network node A along the second data path P2 to the destination network node B.

Optionally, the network node P asks the SDN via a path suggestion request PSR for a path suggestion PS and the SDN calculates in a step 704 according to a best path finding algorithm a further data path from the first network node A to the destination network node B and transmits routing information RI to the network entities on the path suggestion PS. The SDN transmits a data path suggestion PS to the second network node P, which compares the data path suggestion PS with the data path provided with the data path confirmation DPC5 in order to select the path P2 to the destination network node B.

## Claims

1. A first network node (A) for a radio communications network, the first network node (A) being a user equipment of the radio communications network, the first network node (A) comprising at least one processor, at least one memory including computer program code, and at least one communication module, the at least one memory and computer program code configured to, with the at least one processor, and the at least one communication module, cause the first network node (A) at least to operate according to a first operating mode (CL), the first operating mode (CL) comprising
transmitting a data path request to a second network node (P) via a direct radio link being a device to device communication link, D2D link, between the first and second network nodes (A, P), wherein the data path request indicates a destination network node (B), the second network node (P) being a user equipment of the radio communications network,
receiving a data path confirmation in response to the data path request from the second network node (P) via the direct radio link, and
transmitting data from the first network node (A) via the data path towards the destination network node (B) the first network node (A) being configured for operating according to a second operating mode (AG), the second operating mode (AG) comprising
receiving a data path request from a third network node (Q) via a second direct radio link being a D2D link between the first and third network nodes (A, Q), wherein the data path request indicates a further destination network node (B), and
transmitting a data path confirmation to the third network node (Q) via the second direct radio link; and
selecting the first operating mode (CL) or the second operating mode (AG), and
the first network node (A) being configured for
transmitting a further data path request via at least one direct radio link being a D2D link; and
switching from the first operating mode (CL) to the second operating mode (AG) in case of an absence of a response to the further data path request.

2. The first network node (A) according to claim 1, wherein the first mode (CL) comprises
determining local network information; and
transmitting the local network information to the second network node (P) via the direct radio link.

3. The first network node (A) according to claim 1 or 2, wherein the first network node (A) is configured for
transmitting a first registration request to the second network node (P) via the direct radio link,
receiving a first registration confirmation in response to the first registration request, and
starting the first operating mode (CL) in dependence on the reception of the first registration confirmation.

4. A method to operate a first network node (A) of a radio communications network, the first network node (A) being a user equipment of the radio communications network, the method comprising operating according to a first operating mode (CL), the first operating mode (CL) comprising
transmitting a data path request to a second network node (P) via a direct radio link being a D2D link between the first and second network nodes (A, P), wherein the data path request indicates a destination network node (B), the second network node (P) being a user equipment of the radio communications network,
receiving a data path confirmation in response to the data path request from the second network node (P) via the direct radio link, and
transmitting data from the first network node (A) via the data path towards the destination network node (B),
the method further comprising operating according to a second operating mode (AG), the second operating mode (AG) comprising
receiving a data path request from a third network node (Q) via a second direct radio link being a D2D link between the first and third network nodes (A, Q), the third network node (Q) being a user equipment of the radio communications network, wherein the data path request indicates a further destination network node (B), and
transmitting a data path confirmation to the third network node (Q) via the second direct radio link; and
selecting the first operating mode (CL) or the second operating mode (AG), and
the method further comprising
transmitting a further data path request via at least one direct radio link being a D2D link; and
switching from the first operating mode (CL) to the second operating mode (AG) in case of an absence of a response to the further data path request.

5. A second network node (P) for a radio communications network, the second network node (P) being a user equipment of the radio communications network, the second network node (P) comprising at least one processor, at least one memory including computer program code, and at least one communication module, the at least one memory and computer program code configured to, with the at least one processor, and the at least one communication module, cause the second network node (P) at least to operate according to a second operating mode (AG), the second operating mode (AG) comprising
receiving a data path request from a first network node (A) via a direct radio link being a D2D link between the first and second network nodes (A, P), the first network node (A) being a user equipment of the radio communications network, wherein the data path request indicates a destination network node (B), and transmitting a data path confirmation to the first network node (A) via the direct radio link,
the second network node (P) being configured for operating according to a first operating mode (CL), the first operating mode (CL) comprising
- transmitting a data path request to a fourth network node via a third direct radio link between the first and fourth network nodes, wherein the data path request indicates a further destination network node (B),
- receiving a data path confirmation from the fourth network node via the third direct radio link, and
- transmitting data from the first network node (A) via the data path towards the destination network node (B); and
selecting the first operating mode (CL) or the second operating mode (AG).

6. The second network node (P) according to claim 5, the second operating mode (AG) comprising
receiving a plurality of local network information from a plurality of first network nodes (A) via a corresponding direct radio link being a D2D link, the first network nodes (A) being a user equipment of the radio communications network, and
determining aggregated local network information in dependence on the received plurality of local network information.

7. The second network node (P) according to claim 5 or 6, the second operating mode (AG) comprising
receiving further aggregated local network information from a third network node (Q), the third network node (Q) being a user equipment of the radio communications network, and
determining the aggregated local network information in dependence on the further aggregated local network information.

8. The second network node (P) according to one of the claims 5 to 7, the second operating mode (AG) comprising
determining a data path confirmation in dependence on the aggregated local network information, wherein the aggregated local network information comprises path information for reaching the destination network node, and
transmitting the data path confirmation to the first network node (A).

9. The second network node (P) according to claims 5 to 8, the second operating mode (AG) comprising
transmitting aggregated local network information to a controller unit (CU) of an access network.

10. The second network node (P) according to one of the claims 5 to 9, the second network node (P) being configured for
transmitting a first registration request via at least one further direct radio link being a D2D link, and
starting the second operating mode (AG) in dependence on an absence of a first registration confirmation in response to the first registration request.

11. The second network node (P) according to claim 5, the second network node (P) being configured for
determining a number of network nodes being user equipments in the vicinity of the second network node (P), the number of network nodes operating in the second operating mode (AG),
switching from the second operating mode (AG) to the first operating mode (CL) if the number of network nodes exceeds a threshold number.

12. A method for operating a second network node (P) of a radio communications network, the second network node (P) being a user equipment of the radio communications network, the method comprising operating according to a second operation mode (AG), the second operating mode (AG) comprising
receiving a data path request from a first network node (A) being user equipment via a direct radio link being a D2D link between the first and second network nodes (A, P), wherein the data path request indicates a destination network node (B), and
transmitting a data path confirmation to the first network node (A) via the direct radio link,
and the method further comprising operating according to a first operating mode (CL), the first operating mode (CL) comprising
- transmitting a data path request to a fourth network node being user equipment via a third direct radio link being a D2D link between the first and fourth network nodes, wherein the data path request indicates a further destination network node (B),
- receiving a data path confirmation from the fourth network node via the third direct radio link, and
- transmitting data from the first network node (A) via the data path towards the destination network node (B); and
selecting the first operating mode (CL) or the second operating mode (AG).

## Patentansprüche

1. Erster Netzwerkknoten (A) für ein Funkkommunikationsnetz, wobei der erste Netzwerkknoten (A) ein Benutzergerät des Funkkommunikationsnetzes ist, wobei der erste Netzwerkknoten (A) mindestens einen Prozessor, mindestens einen Speicher, der Computerprogrammcode enthält, und mindestens ein Kommunikationsmodul umfasst, wobei der mindestens eine Speicher und der Computerprogrammcode konfiguriert sind, um mit dem mindestens einen Prozessor und dem mindestens einen Kommunikationsmodul den ersten Netzwerkknoten (A) zu veranlassen, mindestens gemäß einem ersten Betriebsmodus (CL) zu arbeiten, wobei der erste Betriebsmodus (CL) umfasst
Senden einer Datenpfadanforderung an einen zweiten Netzwerkknoten (P) über eine direkte Funkverbindung, die eine Gerät-zu-Gerät-Kommunikationsverbindung, D2D-Verbindung, zwischen dem ersten und dem zweiten Netzwerkknoten (A, P) ist, wobei die Datenpfadanforderung einen Zielnetzwerkknoten (B) angibt, wobei der zweite Netzwerkknoten (P) ein Benutzergerät des Funkkommunikationsnetzes ist,
Empfangen einer Datenpfadbestätigung als Antwort auf die Datenpfadanforderung von dem zweiten Netzwerkknoten (P) über die direkte Funkverbindung, und
Senden von Daten von dem ersten Netzwerkknoten (A) über den Datenpfad zu dem Zielnetzwerkknoten (B), wobei der erste Netzwerkknoten (A) konfiguriert ist zum Arbeiten gemäß einem zweiten Betriebsmodus (AG), wobei der zweite Betriebsmodus (AG) umfasst
Empfangen einer Datenpfadanforderung von einem dritten Netzwerkknoten (Q) über eine zweite direkte Funkverbindung, die eine D2D-Verbindung zwischen dem ersten und dem dritten Netzwerkknoten (A, Q) ist, wobei die Datenpfadanforderung einen weiteren Zielnetzwerkknoten (B) angibt, und
Senden einer Datenpfadbestätigung an den dritten Netzwerkknoten (Q) über die zweite direkte Funkverbindung; und
Auswählen des ersten Betriebsmodus (CL) oder des zweiten Betriebsmodus (AG), und
wobei der erste Netzwerkknoten (A) konfiguriert ist zum
Senden einer weiteren Datenpfadanforderung über mindestens eine direkte Funkverbindung, die eine D2D-Verbindung ist; und
Umschalten von dem ersten Betriebsmodus (CL) auf den zweiten Betriebsmodus (AG) bei Ausbleiben einer Antwort auf die weitere Datenpfadanforderung.

2. Erster Netzwerkknoten (A) nach Anspruch 1, wobei der erste Modus (CL) umfasst
Ermitteln von lokalen Netzwerkinformationen; und
Senden der lokalen Netzwerkinformationen an den zweiten Netzwerkknoten (P) über die direkte Funkverbindung.

3. Erster Netzwerkknoten (A) nach Anspruch 1 oder 2, wobei der erste Netzwerkknoten (A) konfiguriert ist zum
Senden einer ersten Registrierungsanforderung an den zweiten Netzwerkknoten (P) über die direkte Funkverbindung,
Empfangen einer ersten Registrierungsbestätigung als Antwort auf die erste Registrierungsanforderung, und
Starten des ersten Betriebsmodus (CL) in Abhängigkeit vom Empfang der ersten Registrierungsbestätigung.

4. Verfahren zum Betreiben eines ersten Netzwerkknotens (A) eines Funkkommunikationsnetzes, wobei der erste Netzwerkknoten (A) ein Benutzergerät des Funkkommunikationsnetzes ist, wobei das Verfahren umfasst: Arbeiten gemäß einem ersten Betriebsmodus (CL), wobei der erste Betriebsmodus (CL) umfasst
Senden einer Datenpfadanforderung an einen zweiten Netzwerkknoten (P) über eine direkte Funkverbindung, die eine D2D-Verbindung zwischen dem ersten und dem zweiten Netzwerkknoten (A, P) ist, wobei die Datenpfadanforderung einen Zielnetzwerkknoten (B) angibt, wobei der zweite Netzwerkknoten (P) ein Benutzergerät des Funkkommunikationsnetzes ist,
Empfangen einer Datenpfadbestätigung als Antwort auf die Datenpfadanforderung von dem zweiten Netzwerkknoten (P) über die direkte Funkverbindung, und
Senden von Daten von dem ersten Netzwerkknoten (A) über den Datenpfad zu dem Zielnetzwerkknoten (B),
wobei das Verfahren ferner umfasst: Arbeiten gemäß einem zweiten Betriebsmodus (AG), wobei der zweite Betriebsmodus (AG) umfasst
Empfangen einer Datenpfadanforderung von einem dritten Netzwerkknoten (Q) über eine zweite direkte Funkverbindung, die eine D2D-Verbindung zwischen dem ersten und dem dritten Netzwerkknoten (A, Q) ist, wobei der dritte Netzwerkknoten (Q) ein Benutzergerät des Funkkommunikationsnetzes ist, wobei die Datenpfadanforderung einen weiteren Zielnetzwerkknoten (B) angibt, und
Senden einer Datenpfadbestätigung an den dritten Netzwerkknoten (Q) über die zweite direkte Funkverbindung; und
Auswählen des ersten Betriebsmodus (CL) oder des zweiten Betriebsmodus (AG), und
wobei das Verfahren ferner umfasst
Senden einer weiteren Datenpfadanforderung über mindestens eine direkte Funkverbindung, die eine D2D-Verbindung ist; und
Umschalten von dem ersten Betriebsmodus (CL) auf den zweiten Betriebsmodus (AG) bei Ausbleiben einer Antwort auf die weitere Datenpfadanforderung.

5. Zweiter Netzwerkknoten (P) für ein Funkkommunikationsnetz, wobei der zweite Netzwerkknoten (P) ein Benutzergerät des Funkkommunikationsnetzes ist, wobei der zweite Netzwerkknoten (P) mindestens einen Prozessor, mindestens einen Speicher, der Computerprogrammcode enthält, und mindestens ein Kommunikationsmodul umfasst, wobei der mindestens eine Speicher und der Computerprogrammcode konfiguriert sind, um mit dem mindestens einen Prozessor und dem mindestens einen Kommunikationsmodul den zweiten Netzwerkknoten (P) zu veranlassen, mindestens gemäß einem zweiten Betriebsmodus (AG) zu arbeiten, wobei der zweite Betriebsmodus (AG) umfasst
Empfangen einer Datenpfadanforderung von einem ersten Netzwerkknoten (A) über eine direkte Funkverbindung, die eine D2D-Verbindung zwischen dem ersten und dem zweiten Netzwerkknoten (A, P) ist, wobei der erste Netzwerkknoten (A) ein Benutzergerät des Funkkommunikationsnetzes ist, wobei die Datenpfadanforderung einen Zielnetzwerkknoten (B) angibt, und Senden einer Datenpfadbestätigung an den ersten Netzwerkknoten (A) über die direkte Funkverbindung,
wobei der zweite Netzwerkknoten (P) konfiguriert ist zum
Arbeiten gemäß einem ersten Betriebsmodus (CL), wobei der erste Betriebsmodus (CL) umfasst
- Senden einer Datenpfadanforderung an einen vierten Netzwerkknoten über eine dritte direkte Funkverbindung zwischen dem ersten und dem vierten Netzwerkknoten, wobei die Datenpfadanforderung einen weiteren Zielnetzwerkknoten (B) angibt,
- Empfangen einer Datenpfadbestätigung von dem vierten Netzwerkknoten über die dritte direkte Funkverbindung, und
- Senden von Daten von dem ersten Netzwerkknoten (A) über den Datenpfad zu dem Zielnetzwerkknoten (B); und
Auswählen des ersten Betriebsmodus (CL) oder des zweiten Betriebsmodus (AG).

6. Zweiter Netzwerkknoten (P) nach Anspruch 5, wobei der zweite Betriebsmodus (AG) umfasst
Empfangen einer Vielzahl von lokalen Netzwerkinformationen von einer Vielzahl von ersten Netzwerkknoten (A) über eine entsprechende direkte Funkverbindung, die eine D2D-Verbindung ist, wobei die ersten Netzwerkknoten (A) ein Benutzergerät des Funkkommunikationsnetzes sind, und
Ermitteln von aggregierten lokalen Netzwerkinformationen in Abhängigkeit von der empfangenen Vielzahl von lokalen Netzwerkinformationen.

7. Zweiter Netzwerkknoten (P) nach Anspruch 5 oder 6, wobei der zweite Betriebsmodus (AG) umfasst
Empfangen von weiteren aggregierten lokalen Netzwerkinformationen von einem dritten Netzwerkknoten (Q), wobei der dritte Netzwerkknoten (Q) ein Benutzergerät des Funkkommunikationsnetzes ist, und
Ermitteln der aggregierten lokalen Netzwerkinformationen in Abhängigkeit von den weiteren aggregierten lokalen Netzwerkinformationen.

8. Zweiter Netzwerkknoten (P) nach einem der Ansprüche 5 bis 7, wobei der zweite Betriebsmodus (AG) umfasst
Ermitteln einer Datenpfadbestätigung in Abhängigkeit von den aggregierten lokalen Netzwerkinformationen, wobei die aggregierten lokalen Netzwerkinformationen Pfadinformationen zum Erreichen des Zielnetzwerkknotens umfassen, und
Senden der Datenpfadbestätigung an den ersten Netzwerkknoten (A).

9. Zweiter Netzwerkknoten (P) nach einem der Ansprüche 5 bis 8, wobei der zweite Betriebsmodus (AG) umfasst
Senden von aggregierten lokalen Netzwerkinformationen an eine Steuereinheit (CU) eines Zugangsnetzes.

10. Zweiter Netzwerkknoten (P) nach einem der Ansprüche 5 bis 9, wobei der zweite Netzwerkknoten (P) konfiguriert ist zum
Senden einer ersten Registrierungsanforderung über mindestens eine weitere direkte Funkverbindung, die eine D2D-Verbindung ist, und
Starten des zweiten Betriebsmodus (AG) in Abhängigkeit von einem Ausbleiben einer ersten Registrierungsbestätigung als Antwort auf die erste Registrierungsanforderung.

11. Zweiter Netzwerkknoten (P) nach Anspruch 5, wobei der zweite Netzwerkknoten (P) konfiguriert ist zum
Ermitteln einer Anzahl von Netzwerkknoten, die Benutzergeräte sind, in der Nähe des zweiten Netzwerkknotens (P), wobei die Anzahl von Netzwerkknoten in dem zweiten Betriebsmodus (AG) arbeitet,
Umschalten von dem zweiten Betriebsmodus (AG) auf den ersten Betriebsmodus (CL), wenn die Anzahl von Netzwerkknoten eine Schwellenzahl überschreitet.

12. Verfahren zum Betreiben eines zweiten Netzwerkknotens (P) eines Funkkommunikationsnetzes, wobei der zweite Netzwerkknoten (P) ein Benutzergerät des Funkkommunikationsnetzes ist, wobei das Verfahren umfasst: Arbeiten gemäß einem zweiten Betriebsmodus (AG), wobei der zweite Betriebsmodus (AG) umfasst:
Empfangen einer Datenpfadanforderung von einem ersten Netzwerkknoten (A), der ein Benutzergerät ist, über eine direkte Funkverbindung, die eine D2D-Verbindung zwischen dem ersten und dem zweiten Netzwerkknoten (A, P) ist, wobei die Datenpfadanforderung einen Zielnetzwerkknoten (B) angibt, und
Senden einer Datenpfadbestätigung an den ersten Netzwerkknoten (A) über die direkte Funkverbindung,
und wobei das Verfahren ferner umfasst: Arbeiten gemäß einem ersten Betriebsmodus (CL), wobei der erste Betriebsmodus (CL) umfasst
- Senden einer Datenpfadanforderung an einen vierten Netzwerkknoten, der ein Benutzergerät ist, über eine dritte direkte Funkverbindung, die eine D2D-Verbindung zwischen dem ersten und dem vierten Netzwerkknoten ist, wobei die Datenpfadanforderung einen weiteren Zielnetzwerkknoten (B) angibt,
- Empfangen einer Datenpfadbestätigung von dem vierten Netzwerkknoten über die dritte direkte Funkverbindung, und
- Senden von Daten von dem ersten Netzwerkknoten (A) über den Datenpfad zu dem Zielnetzwerkknoten (B); und
Auswählen des ersten Betriebsmodus (CL) oder des zweiten Betriebsmodus (AG).

## Revendications

1. Premier nœud de réseau (A) pour un réseau de radiocommunications, le premier nœud de réseau (A) étant un équipement utilisateur du réseau de radiocommunications, le premier nœud de réseau (A) comprenant au moins un processeur, au moins une mémoire incluant du code de programme informatique, et au moins un module de communication, l'au moins une mémoire et le code de programme informatique étant configurés pour, avec l'au moins un processeur et l'au moins un module de communication, amener le premier nœud de réseau (A) à fonctionner au moins selon un premier mode de fonctionnement (CL), le premier mode de fonctionnement (CL) comprenant
la transmission d'une requête de chemin de données à un deuxième nœud de réseau (P) via une liaison radio directe étant une liaison de communication de dispositif à dispositif, liaison D2D, entre les premier et deuxième nœuds de réseau (A, P), dans laquelle la requête de chemin de données indique un nœud de réseau de destination (B), le deuxième nœud de réseau (P) étant un équipement utilisateur du réseau de radiocommunications,
la réception d'une confirmation de chemin de données en réponse à la requête de chemin de données provenant du deuxième nœud de réseau (P) via la liaison radio directe, et
la transmission de données depuis le premier nœud de réseau (A) via le chemin de données vers le nœud de réseau de destination (B) le premier nœud de réseau (A) étant configuré pour fonctionner selon un deuxième mode de fonctionnement (AG), le deuxième mode de fonctionnement (AG) comprenant
la réception d'une requête de chemin de données provenant d'un troisième nœud de réseau (Q) via une deuxième liaison radio directe étant une liaison D2D entre les premier et troisième nœuds de réseau (A, Q), dans laquelle la requête de chemin de données indique un autre nœud de réseau de destination (B), et
la transmission d'une confirmation de chemin de données au troisième nœud de réseau (Q) via la deuxième liaison radio directe ; et
sélectionner le premier mode de fonctionnement (CL) ou le deuxième mode de fonctionnement (AG), et
le premier nœud de réseau (A) étant configuré pour
transmettre une autre requête de chemin de données via au moins une liaison radio directe étant une liaison D2D ; et
commuter du premier mode de fonctionnement (CL) au deuxième mode de fonctionnement (AG) en cas d'absence de réponse à l'autre requête de chemin de données.

2. Premier nœud de réseau (A) selon la revendication 1, dans lequel le premier mode (CL) comprend
la détermination d'informations de réseau local ; et
la transmission des informations de réseau local au deuxième nœud de réseau (P) via la liaison radio directe.

3. Premier nœud de réseau (A) selon la revendication 1 ou 2, dans lequel le premier nœud de réseau (A) est configuré pour
transmettre une première requête d'enregistrement au deuxième nœud de réseau (P) via la liaison radio directe,
recevoir une première confirmation d'enregistrement en réponse à la première requête d'enregistrement, et
démarrer le premier mode de fonctionnement (CL) en fonction de la réception de la première confirmation d'enregistrement.

4. Procédé de fonctionnement d'un premier nœud de réseau (A) d'un réseau de radiocommunications, le premier nœud de réseau (A) étant un équipement utilisateur du réseau de radiocommunications, le procédé comprenant le fonctionnement selon un premier mode de fonctionnement (CL), le premier mode de fonctionnement (CL) comprenant
la transmission d'une requête de chemin de données à un deuxième nœud de réseau (P) via une liaison radio directe étant une liaison D2D entre les premier et deuxième nœuds de réseau (A, P), dans laquelle la requête de chemin de données indique un nœud de réseau de destination (B), le deuxième nœud de réseau (P) étant un équipement utilisateur du réseau de radiocommunications,
la réception d'une confirmation de chemin de données en réponse à la requête de chemin de données provenant du deuxième nœud de réseau (P) via la liaison radio directe, et
la transmission de données depuis le premier nœud de réseau (A) via le chemin de données vers le nœud de réseau de destination (B),
le procédé comprenant en outre le fonctionnement selon un deuxième mode de fonctionnement (AG), le deuxième mode de fonctionnement (AG) comprenant
la réception d'une requête de chemin de données provenant d'un troisième nœud de réseau (Q) via une deuxième liaison radio directe étant une liaison D2D entre les premier et troisième nœuds de réseau (A, Q), le troisième nœud de réseau (Q) étant un équipement utilisateur du réseau de radiocommunications, dans laquelle la requête de chemin de données indique un autre nœud de réseau de destination (B), et
la transmission d'une confirmation de chemin de données au troisième nœud de réseau (Q) via la deuxième liaison radio directe ; et
la sélection du premier mode de fonctionnement (CL) ou du deuxième mode de fonctionnement (AG), et
le procédé comprenant en outre
la transmission d'une autre requête de chemin de données via au moins une liaison radio directe étant une liaison D2D ; et
la commutation du premier mode de fonctionnement (CL) au deuxième mode de fonctionnement (AG) en cas d'absence de réponse à l'autre requête de chemin de données.

5. Deuxième nœud de réseau (P) pour un réseau de radiocommunications, le deuxième nœud de réseau (P) étant un équipement utilisateur du réseau de radiocommunications, le deuxième nœud de réseau (P) comprenant au moins un processeur, au moins une mémoire incluant du code de programme informatique, et au moins un module de communication, l'au moins une mémoire et le code de programme informatique étant configurés pour, avec l'au moins un processeur et l'au moins un module de communication, amener le deuxième nœud de réseau (P) à fonctionner au moins selon un deuxième mode de fonctionnement (AG), le deuxième mode de fonctionnement (AG) comprenant
la réception d'une requête de chemin de données provenant d'un premier nœud de réseau (A) via une liaison radio directe étant une liaison D2D entre les premier et deuxième nœuds de réseau (A, P), le premier nœud de réseau (A) étant un équipement utilisateur du réseau de radiocommunications, dans laquelle la requête de chemin de données indique un nœud de réseau de destination (B), et la transmission d'une confirmation de chemin de données au premier nœud de réseau (A) via la liaison radio directe,
le deuxième nœud de réseau (P) étant configuré pour fonctionner selon un premier mode de fonctionnement (CL), le premier mode de fonctionnement (CL) comprenant
- la transmission d'une requête de chemin de données à un quatrième nœud de réseau via une troisième liaison radio directe entre les premier et quatrième nœuds de réseau, dans laquelle la requête de chemin de données indique un autre nœud de réseau de destination (B),
- la réception d'une confirmation de chemin de données provenant du quatrième nœud de réseau via la troisième liaison radio directe, et
- la transmission de données depuis le premier nœud de réseau (A) via le chemin de données vers le nœud de réseau de destination (B) ; et
la sélection du premier mode de fonctionnement (CL) ou du deuxième mode de fonctionnement (AG).

6. Deuxième nœud de réseau (P) selon la revendication 5, le deuxième mode de fonctionnement (AG) comprenant
la réception d'une pluralité d'informations de réseau local provenant d'une pluralité de premiers nœuds de réseau (A) via une liaison radio directe correspondante étant une liaison D2D, les premiers nœuds de réseau (A) étant un équipement utilisateur du réseau de radiocommunications, et
la détermination d'informations de réseau local agrégées en fonction de la pluralité reçue d'informations de réseau local.

7. Deuxième nœud de réseau (P) selon la revendication 5 ou 6, le deuxième mode de fonctionnement (AG) comprenant
la réception d'autres informations de réseau local agrégées provenant d'un troisième nœud de réseau (Q), le troisième nœud de réseau (Q) étant un équipement utilisateur du réseau de radiocommunications, et
la détermination des informations de réseau local agrégées en fonction des autres informations de réseau local agrégées.

8. Deuxième nœud de réseau (P) selon l'une des revendications 5 à 7, le deuxième mode de fonctionnement (AG) comprenant
la détermination d'une confirmation de chemin de données en fonction des informations de réseau local agrégées, dans lequel les informations de réseau local agrégées comprennent des informations de chemin pour atteindre le nœud de réseau de destination, et
la transmission de la confirmation de chemin de données au premier nœud de réseau (A).

9. Deuxième nœud de réseau (P) selon l'une des revendications 5 à 8, le deuxième mode de fonctionnement (AG) comprenant
la transmission d'informations de réseau local agrégées à une unité de commande (CU) d'un réseau d'accès.

10. Deuxième nœud de réseau (P) selon l'une des revendications 5 à 9, le deuxième nœud de réseau (P) étant configuré pour
transmettre une première requête d'enregistrement via au moins une autre liaison radio directe étant une liaison D2D, et
démarrer le deuxième mode de fonctionnement (AG) en fonction d'une absence de première confirmation d'enregistrement en réponse à la première requête d'enregistrement.

11. Deuxième nœud de réseau (P) selon la revendication 5, le deuxième nœud de réseau (P) étant configuré pour
déterminer un nombre de nœuds de réseau étant des équipements utilisateurs au voisinage du deuxième nœud de réseau (P), le nombre de nœuds de réseau fonctionnant dans le deuxième mode de fonctionnement (AG),
commuter du deuxième mode de fonctionnement (AG) au premier mode de fonctionnement (CL) si le nombre de nœuds de réseau dépasse un nombre seuil.

12. Procédé de fonctionnement d'un deuxième nœud de réseau (P) d'un réseau de radiocommunications, le deuxième nœud de réseau (P) étant un équipement utilisateur du réseau de radiocommunications, le procédé comprenant le fonctionnement selon un deuxième mode de fonctionnement (AG), le deuxième mode de fonctionnement (AG) comprenant
la réception d'une requête de chemin de données provenant d'un premier nœud de réseau (A) étant un équipement utilisateur via une liaison radio directe étant une liaison D2D entre les premier et deuxième nœuds de réseau (A, P), dans laquelle la requête de chemin de données indique un nœud de réseau de destination (B), et
la transmission d'une confirmation de chemin de données au premier nœud de réseau (A) via la liaison radio directe,
et le procédé comprenant en outre le fonctionnement selon un premier mode de fonctionnement (CL), le premier mode de fonctionnement (CL) comprenant
- la transmission d'une requête de chemin de données à un quatrième nœud de réseau étant un équipement utilisateur via une troisième liaison radio directe étant une liaison D2D entre les premier et quatrième nœuds de réseau, dans laquelle la requête de chemin de données indique un autre nœud de réseau de destination (B),
- la réception d'une confirmation de chemin de données provenant du quatrième nœud de réseau via la troisième liaison radio directe, et
- la transmission de données depuis le premier nœud de réseau (A) via le chemin de données vers le nœud de réseau de destination (B) ; et
la sélection du premier mode de fonctionnement (CL) ou du deuxième mode de fonctionnement (AG).
